# EUROPÄISCHE PATENTSCHRIFT

(11) **EP 2 193 960 B1**
(45) Veröffentlichungstag und Bekanntmachung des Hinweises auf die Patenterteilung: **13.10.2010**
(21) Anmeldenummer: 08021166.7
(22) Anmeldetag: 05.12.2008
(51) Int. Cl.: B60R 21/205, B60R 21/16

(54) **Modular aufgebautes Innenverkleidungsbauteil mit einem Schusskanalmodul für einen Airbag**
Modular structured internal cladding component with a bullet channel module for an airbag
Composant de revêtement interne posé de façon modulaire doté d'un module de trajectoire de projectile pour un airbag

(43) Veröffentlichungstag der Anmeldung: 09.06.2010
(73) Patentinhaber: Peguform GmbH, 79268 Bötzingen (DE)
(72) Erfinder: Basile, Robert, 79268 Bötzingen (DE); Brauer, Christian, 85055 Ingolstadt (DE); Forsthofer, Konrad, 93352 Rohr-Laaberberg (DE); Schott, Jens, 79111 Freiburg (DE)
(74) Vertreter: Patentanwälte Westphal, Mussgnug & Partner

(56) Entgegenhaltungen:
- EP-A- 0 688 700
- EP-A- 0 857 623
- WO-A-03/082632
- DE-C1- 3 710 417

## Beschreibung

Die vorliegende Erfindung betrifft ein modular aufgebautes Innenverkleidungsbauteil für Kraftfahrzeuge, insbesondere eine Instrumententafel oder ein Armaturenbrett, mit den Merkmalen des Oberbegriffs des Anspruchs 1.

Gattungsgemäße Innenverkleidungsbauteile für Kraftfahrzeuge mit integrierten Airbagsystemen, wobei es sich häufig um Instrumententafeln oder Armaturenbretter handelt, sind in zahlreichen Veröffentlichungen beschrieben. Bei einer Instrumententafel besteht das Airbagsystem in der Regel aus einem Airbagmodul mit Airbag und den entsprechenden pyrotechnischen Mitteln zum Erzeugen eines Gases zum Aufblasen des Airbags, einem Airbagschusskanal, der häufig als separates Bauteil ausgebildet ist, und einer Airbagabdeckung, die häufig in die Instrumententafel integriert ist und in der Regel auf der Sichtseite der Instrumententafel durch eine Dekoroberfläche abgedeckt wird.

Das problemlose Öffnen der Airbagabdeckung im Crashfall ist eines der wichtigsten Kriterien für die Funktionstüchtigkeit einer Airbageinrichtung. Um dies zu gewährleisten sind in der Instrumententafel selber auf ihrer Rückseite im Bereich der Airbagabdeckung üblicherweise Verschwächungslinien angebracht, die ein Öffnen der Airbagabdeckung erleichtern. Der Airbagschusskanal hat in der Regel die alleinige Funktion, den sich entfaltenden Airbag in Richtung Airbagabdeckung zu lenken, wo der Airbag die Verschwächungslinien aufbricht und damit die Abdeckung öffnet. Zur Sicherheit der Fahrzeuginsassen muss dabei gewährleistet sein, dass keine scharfen Kanten oder Bruchstücke entstehen, die die Fahrzeuginsassen verletzen oder den Airbag beschädigen könnten. Darüber hinaus muss gewährleistet sein, dass die Airbagabdeckung selber, die beim Aufprall des Airbags einem enormen Druck ausgesetzt ist, nicht abreißt oder zersplittert, wobei ebenfalls Fahrzeuginsassen verletzt werden könnten.

Um ein Splittern der Airbagabdeckung zu verhindern, werden häufig zumindest schichtweise elastische Materialien für die Konstruktion der Airbagabdeckung gewählt, oder das Trägermaterial der Instrumententafel wird im Bereich der Airbagabdeckung durch das Einlegen von Gewebe verstärkt. Dabei wird das Gewebe in Kunststoff eingeschmolzen bzw. mit Kunststoff umspritzt. Häufig wird dabei das Gewebe zusätzlich dazu genutzt, als Scharnier zu fungieren und gleichzeitig beim Öffnen der Airbagabdeckung die Airbagabdeckung zu sichern und zu halten.

In der DE 10 2004 010 043 A1 wird ein Verkleidungsteil mit Airbagklappenbereich beschrieben, wobei innerhalb des Airbagklappenbereichs in einen flächigen Kunststoffträger des Verkleidungsteils ein als Scharnier dienendes flexibles flächiges Element eingebettet ist, das an einer Berandung des Airbagklappenbereichs aus dem Kunststoffträger und dem Verkleidungsteil rückseitig herausgeführt wird und außerhalb des Airbagklappenbereichs befestigt ist. In diesem Austrittsbereich besitzt das flächige Element eine Überlänge und bildet somit eine Schlaufe, die ein Herausdrücken der Airbagabdeckung aus der Instrumententafelebene ermöglicht und damit das Aufklappen der Abdeckung erleichtert.

In der gattungsgemässen DE 10 2005 003 550 A1 wird ein Verkleidungsteil für ein Fahrzeug beschrieben mit einem darin integrierten Airbagklappenbereich, der bei einer Aktivierung eines hinter dem Airbagklappenbereich angeordneten Airbags vom Verkleidungsteil unter Freigabe einer Airbagaustrittsöffnung abhebbar ist. Dabei ist ein Fangband so in einen flächigen Kunststoffträger des Verkleidungsteiles eingebettet, dass das Fangband mit einem ersten Fangbandbereich am Airbagklappenbereich festgelegt ist, wobei das Fangband, vom ersten Fangbandbereich ausgehend, mit einem Schlaufenbereich aus dem Kunststoffträger herausgeführt und unter Bildung einer Fangbandschlaufe mit vorgegebener Schlaufenlänge wieder zum Kunststoffträger zurückgeführt wird. Auch in diesem Falle dient die mit dem Fangband ausgebildete Schlaufe dazu, das Aufklappen der Airbagabdeckung zu erleichtern, während das Fangband selber die Funktion hat, die Abdeckung zu sichern und ein Ablösen der Airbagabdeckung beim Entfalten des Airbags zu verhindern.

Um ein Ausreißen oder Abreißen der Bänder oder des Scharniergewebes zu verhindern, sind diese in der Regel flächig im Kunststoffträger des Verkleidungsbauteils eingebettet. Dies hat wiederum den Nachteil, dass beim Öffnen der Airbagabdeckung das Scharnierband oder Gewebe abgewinkelt wird, so dass Scherkräfte auftreten, die trotzt der oben genannten Vorsichtsmaßnahmen ein Abreißen der Airbagabdeckung bewirken können, insbesondere dann, wenn beim Aufklappen der Airbagabdeckung scharfe Kanten ausgebildet werden, die in das Scharniergewebe oder die Befestigungsbänder einschneiden.

Dem Schusskanal kommt bei dem Airbagsystem meist nur die Funktion zu, den sich entfaltenden Airbag gezielt auf die Abdeckung zu lenken und so ein Aufreißen der Abdeckung zu ermöglichen. Um diese Funktion zu erfüllen, werden an den Schusskanal keine besonderen Materialanforderungen gestellt, so dass der Schusskanal häufig direkt mit an den Träger angespritzt wird und aus dem gleichen Material besteht wie das Trägermaterial des Verkleidungsbauteils. Allerdings ist der Druck auf die Schusskanalwände ebenfalls sehr hoch, so dass diese Bereiche häufig durch Fasern verstärkt werden oder auch als flexible Gewebe ausgebildet werden, um dem enormen Druck ausweichen zu können. So wird in der DE 199 36 353 A1 ein Airbagsystem beschrieben, das über einen Schusskanal verfügt, der als flexibler Gewebeschlauch ausgebildet ist und mit dem Verkleidungsbauteil fest verbunden ist. Die Stabilität des Schusskanals reicht meist nicht aus, um neben der Führung des Airbags weitere Funktionen zu übernehmen.

In der EP 1 955 910 A1 wird ein Schusskanal beschrieben, der dafür ausgelegt ist, dass das Airbagmodul direkt in den Schusskanal eingehängt werden kann. Um das Airbagmodul jedoch ausreichend in der Konstruktion des Kraftfahrzeugs zu fixieren und zu stabilisieren, reicht die Stabilität des Schusskanals nicht aus, sondern es ist eine zusätzliche Anbindung an einen Karosseriequerträger notwendig, was den Einbau des Airbagsystems wiederum erschwert.

Aufgabe der vorliegenden Erfindung ist es, ein Innenverkleidungsbauteil für ein Kraftfahrzeug mit einem Airbagsystem anzubieten, das die Nachteile des Standes der Technik nicht aufweist.

Gelöst wird die Aufgabe durch ein Innenverkleidungsbauteil mit den Merkmalen des Anspruchs 1. Vorteilhafte Ausgestaltungen und Weiterentwicklungen des erfindungsgemäßen Innenverkleidungsbauteils sind Gegenstand der Unteransprüche.

Bei dem erfindungsgemäßen Innenverkleidungsbauteil handelt es sich um eine Instrumententafel mit einem integrierten Airbagsystem, die modular aus einem Schusskanalmodul, einem Airbagmodul und dem Innenverkleidungsbauteil selber aufgebaut ist.

Um diesen modularen Aufbau zu ermöglichen, umfasst das Schusskanalmodul eine Schusskanalabdeckung und den eigentlichen Schusskanal, wobei in die Schusskanalabdeckung und einen seitlichen Bereich des Schusskanals ein mit Kunststoff umspritztes Gewebe mit Scharnierfunktion eingelegt ist.

Erfindungswesentlich ist dabei, dass das Schusskanalmodul als Hybridbauteil ausgeführt ist und ein, die Seitenwände des Schusskanals verstärkendes, in Kunststoff eingefasstes Verstärkungselement umfasst. Dabei ist die Verstärkung des Schusskanals durch das Verstärkungselement so ausgeprägt, dass nun das Airbagmodul direkt am Schusskanal befestigt werden kann, ohne dass eine zusätzliche verstärkende Verbindung zu einem Instrumententafelquerträger notwendig ist. Neben der verstärkenden Wirkung des Schusskanals selber bringt das Verstärkungselement somit den zusätzlichen Vorteil, dass nun ein dauerhaftes Fixieren des Airbagmoduls an entsprechenden Befestigungsvorrichtungen, beispielsweise durch Schrauben möglich ist, ohne dass ein Lockern der Befestigung durch Materialveränderung befürchtet werden muss, wie es bei reinen Kunststoffmaterialien der Fall ist. Diese direkte Befestigung des Airbagmoduls am Schusskanalmodul bedeutet eine beträchtliche Verringerung des Montageaufwandes beim Einbau der Instrumententafel in das Kraftfahrzeug, da nun die Instrumententafel mit dem gesamten Airbagsystem vormontiert und als ein Stück in die Kraftfahrzeugkarosserie eingesetzt werden kann. Eine Vormontage des Airbagmoduls an einem Querträger oder eine aufwändige anschließende Fertigmontage durch Verbinden mit einem Querträger ist nun nicht mehr erforderlich.

Als Verstärkungselemente können Einleger aus Blech oder anderen Materialien, wie z.B. Kunststoffen, eingesetzt werden.

Die Sicherung der Airbagabdeckung wird durch das mit Kunststoff umspritzte Gewebe mit Scharnierfunktion gewährleistet, das in die Schusskanalabdeckung eingelegt ist sowie in einen seitlichen Teilbereich des Schusskanals.

Bei dem erfindungsgemäßen Innenverkleidungsbauteil wird zwischen Schusskanalabdeckung und Airbagabdeckung unterschieden, da die angestrebte Modulbauweise des Innenverkleidungsbauteils erst dadurch verwirklicht wird, dass der Schusskanal zunächst als separates Modul gefertigt wird, das eine mit der Airbagabdeckung im Träger des Innenverkleidungsbauteils korrespondierende Schusskanalabdeckung aufweist, die mit einem Gewebe verstärkt ist und bei der Montage des Schusskanalmoduls mit der Rückseite der Airbagabdeckung verschweißt oder verklebt wird. Das Gewebe, das zusätzlich in einen seitlichen Teilbereich des Schusskanals hineinreicht, dient als Scharnier und zusätzlich als Befestigung und Sicherung des Deckels. Wesentlich bei dieser Anordnung ist, dass die Scharnierfunktion nun vollständig im Schusskanalmodul integriert ist und nicht mehr im Träger der Instrumententafel, wie es im Stand der Technik beschrieben ist. Durch diese Anordnung des Scharniergewebes im Schusskanal wird vermieden, dass beim Öffnen der Airbagabdeckung das Scharniergewebe einen Winkel ausbildet, der möglicherweise Scherkräfte hervorruft und eine Beschädigung des Gewebes herbeiführen könnte. Somit wird die Krafteinleitung in das Gewebescharnier optimiert und Scherkräfte werden dadurch vermieden, dass nach dem Öffnen der Airbagabdeckung das Gewebescharnier im Idealfall eine Gerade ausbildet.

Dabei durchläuft das Gewebe in der Seitenwand des Schusskanals eine Umlenkung, die eine zusätzliche Verankerung des in der Schusskanalseitenwand eingebetteten Gewebes bewirkt und als eine Art Stopperschlaufe verhindert, dass sich das Gewebe beim Aufreißen der Airbagabdeckung aus der Einbettung im Schusskanal löst.

Bei einer bevorzugten Ausführung der vorliegenden Erfindung weist der das Gewebe umfassende Teilbereich des Schusskanals eine V-förmige Umlenkung auf, in die das Gewebe eingelegt ist, wodurch die zusätzliche Verankerung des Gewebes und damit der zusätzliche Halt für den sich öffnenden Deckel der Airbagabdeckung gegeben ist. Diese Umlenkung kann jedoch in jeder anderen passenden Form, wie z.B. U-förmig oder rechteckig, erfolgen.

Bei einer weiteren bevorzugten Ausgestaltung des Schusskanalmoduls ist zwischen dem das Gewebe umfassenden Teilbereich des Schusskanals und der Schusskanalabdeckung das Gewebe als im Schusskanals angeordnete, frei bewegliche Hubschlaufe ausgebildet. Die Hubschlaufe, die ein Herausdrücken der Airbagabdeckung aus der Ebene der Instrumententafel durch den sich entfaltenden Airbag ermöglicht und damit das Öffnen der Airbagabdeckung erleichtert, korrespondiert mit der Dicke der Instrumententafel und ist so ausgelegt, dass im Crashfall die Airbagabdeckung so weit herausgedrückt wird, dass ein Splittern der Abdeckung im Bereich des Scharniers vermieden werden kann. Ein besonderer Vorteil dieser Anordnung besteht darin, dass nun die Hubhöhe durch die Schlaufenlänge variiert werden kann, so dass das Schusskanalmodul quasi der Dicke der jeweils eingesetzte Instrumententafel angepasst werden kann, wobei Dicke der Instrumententafel vornehmlich durch die Wahl der Dekorschicht (Leder, Slushhaut, Folie, Spritzguss genarbt o.a.) und der Zwischenschicht (Schaum, Gewirke, o.a.)beeinflusst wird.

Auf diese Weise wird dem Modulcharakter der Instrumententafel bzw. der Idee des modularen Aufbaus aus Instrumententafel, Schusskanalmodul und Airbagmodul Rechnung getragen und das Schusskanalmodul kann mit unterschiedlich gestalteten Instrumententafeln kombiniert werden, solange die rückseitige Oberfläche des Trägers im Bereich der Airbagabdeckung gleich bleibt. So kann ein unterschiedlicher Schichtenaufbau der Instrumententafel beispielsweise mit Haptik verbessernden Zwischenschichten aus Schaum oder Dekorschichten aus Leder, Planware, Slushhäuten etc. verwirklicht werden, wobei eine Anpassung des Schusskanalmoduls allein durch die Einstellung der Hubhöhe der Schlaufenlänge möglich ist.

Der modulare Aufbau wird weiterhin dadurch begünstigt, dass bei einer vorteilhaften Ausführungsform das Schusskanalmodul für einen flächigen Befestigungsrand verfügt, mit dem das Schusskanalmodul mit dem Träger der Instrumententafel verschweißt oder verklebt ist. Vorteilhaft kann dieser flächige Befestigungsrand auch fußförmig ausgebildet und nach unten hin verbreitert sein, um auf diese Weise eine festere Verbindung zur Instrumententafel zu ermöglichen.

Eine weitere vorteilhafte Ausgestaltung des Schusskanalmoduls sieht vor, dass das Scharnier- und Befestigungsgewebe bis in den flächigen Befestigungsrand des Schusskanalmoduls verlängert und dort verankert ist, so dass ein Herausreißen des Gewebes aus der Verankerung im Material des Schusskanals nachhaltig verhindert ist. Dabei ermöglicht das erfindungsgemäße Schusskanalmodul einen kraftoptimierten Verlauf des Scharniergewebes, da beim Öffnen des Airbagdeckels eine gestreckte Anordnung des Gewebes resultiert und Scherkräfte vermieden werden, die eine Beschädigung des Gewebes hervorrufen könnten.

Das Schusskanalmodul selber ist als Hybridbauteil ausgeführt und umfasst ein die Seitenwände des Schusskanals verstärkendes, in den Kunststoff eingefasstes Verstärkungselement. Dieses Verstärkungselement verfügt über Befestigungseinrichtungen für ein Airbagmodul. Dabei können die Befestigungsvorrichtungen so gestaltet sein, dass unterschiedliche Airbagmodule mit dem Schusskanalmodul kombiniert werden können, was den Modulcharakter des Systems weiter verstärkt. Die Befestigung des Airbagmoduls kann dabei konventionell über Schraubverbindungen erfolgen, was jedoch nicht als Einschränkung zu sehen ist, da dieser modulare Aufbau mit jeder Art von Verbindungsbildung kombiniert werden kann.

Das erfindungsgemäße Konzept ermöglicht es, einen streng modularen Aufbau einer Instrumententafel mit einem Airbagsystem zu realisieren, wobei an die Instrumententafel selber lediglich die Forderung gestellt werden muss, dass auf ihrer Rückseite im Bereich der Airbagöffnung eine genormte flächige Struktur vorhanden ist, über die das Schusskanalmodul mit seinem flächigen Befestigungsrand mit der Instrumententafel verklebt oder verschweißt werden kann. Auf diese Weise können unterschiedliche Instrumententafeln über ein universell einsetzbares Schusskanalmodul mit einem frei wählbaren Airbagmodul kombiniert werden.

Im Folgenden wird die vorliegende Erfindung anhand von Zeichnungen ausführlich erläutert. Dabei zeigen:
- Figur 1: einen Ausschnitt aus einer Instrumententafel im Querschnitt,
- Figur 2: einen Ausschnitt aus einer Instrumententafel im Querschnitt und
- Figur 3: den Ausschnitt aus Figur 2 mit geöffneter Airbagabde- ckung.

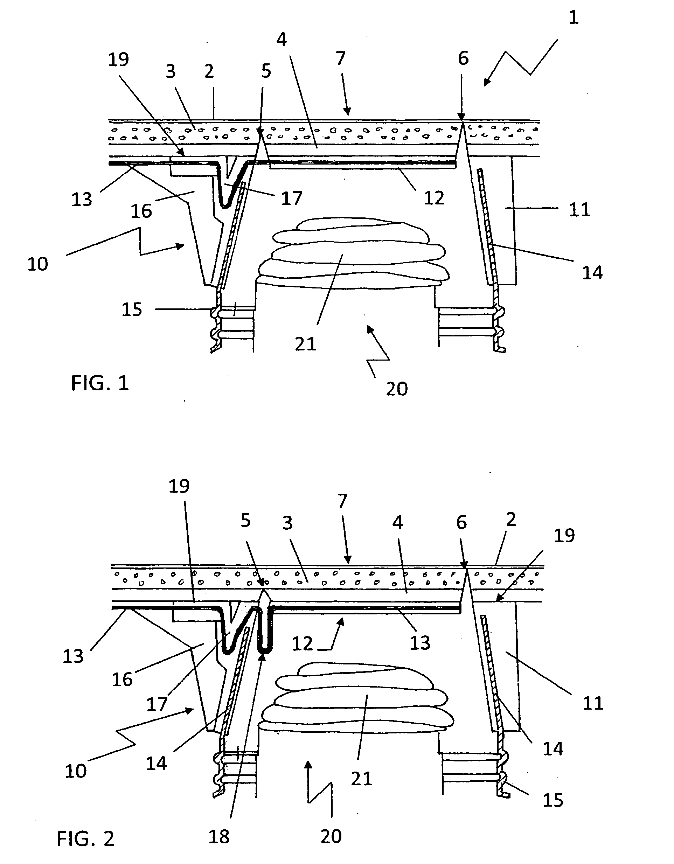

In der Figur 1 ist ein Ausschnitt einem Innenverkleidungsbauteil im Querschnitt dargestellt, wobei das Innenverkleidungsbauteil modular aus einer Instrumententafel 1, einem Schusskanalmodul 10 und einem Airbagmodul 20 aufgebaut ist. Die Instrumententafel 1 ist im vorliegenden Fall konventionell aufgebaut und besteht aus einer Dekorschicht 2, einer die Haptik verbessernden Schaumschicht 3 sowie einem Träger 4. Im Bereich der Airbagabdeckung 7 sind zwei Verschwächungen 5, 6 zu sehen, die im Crashfall das Öffnen der Airbagabdeckung erleichtern sollen.

Das Schusskanalmodul 10 ist als Hybridbauteil aufgebaut, wobei die Schusskanalwände 11 Verstärkungselemente 14 zur Stabilisiserung aufweisen. Um einen modularen Aufbau des gesamten Systems zu ermöglichen, verfügt das Schusskanalmodul 10 über eine separate Schusskanalabdeckung 12, die mit einem Gewebe 13 verstärkt ist. In der vorliegenden Darstellung ist die Schusskanalabdeckung 12 bereits fest mit der Airbagabdeckung 7 verbunden (verklebt oder verschweißt). Das Gewebe 13 ist als Scharniergewebe ausgebildet und wird fortgesetzt in der Schusskanalwand 11 im Seitenbereich des Schusskanals, wo das Gewebe 13 eine Umlenkung 17 durchläuft, die als Verankerung des Scharniergewebes 13 dient und ein Herausreißen des Gewebes 13 beim explosionsartigen Öffnen des Airbags verhindert. Des Weiteren ist in der Figur 1 eine zusätzliche Verstärkung der Schusskanalwände 11 durch Rippen 16 zu erkennen. Darüber hinaus erkennt man in der Figur 1 den flächigen Befestigungsrand 18 des Schusskanalmoduls 10, über den das Schusskanalmoduls 10 mit dem Träger 4 der Instrumententafel 1 verklebt oder verschweißt ist.

Vom Airbagmodul 20 ist in Figur 1 lediglich der zusammengefaltete Airbag 21 gezeigt, während die pyrotechnischen Auslösungsvorrichtungen für den Airbag nicht zu sehen sind. Das Airbagmodul 20 ist über Befestigungsvorrichtungen 15 mit dem Verstärkungselement 14 des Schusskanalmoduls 10 fest verbunden.

In Figur 2 wird eine vorteilhafte Ausführungsform des modular aufgebauten Innenverkleidungsbauteils mit Airbagsystem gezeigt, wobei das Gewebe 13 im Bereich zwischen der Schusskanalwand 11 und der Schusskanalabdeckung 12 heraustritt und eine Hubschlaufe 18 ausbildet, welche die Funktion hat, das Öffnen der Airbagabdeckung 7 zusätzlich zu erleichtern, indem beim Entfalten des Airbags 21 nun zunächst in einer Vorwärtsbewegung die Airbagabdeckung 7 aus der Instrumententafelebene nach vorne herausgedrückt wird, dann aber von dem Scharniergewebe 13 gehalten wird. Auch in diesem Fall sind wiederum Schwächungen 5,6 im Bereich der Airbagabdeckung 7 zu erkennen, die zusätzlich das Öffnen der Airbagabdeckung 7 erleichtern. Die übrigen konstruktiven Merkmale des in der Figur 2 gezeigten Ausschnitts aus einem Innenverkleidungsbauteil entsprechen denen der Figur 1.

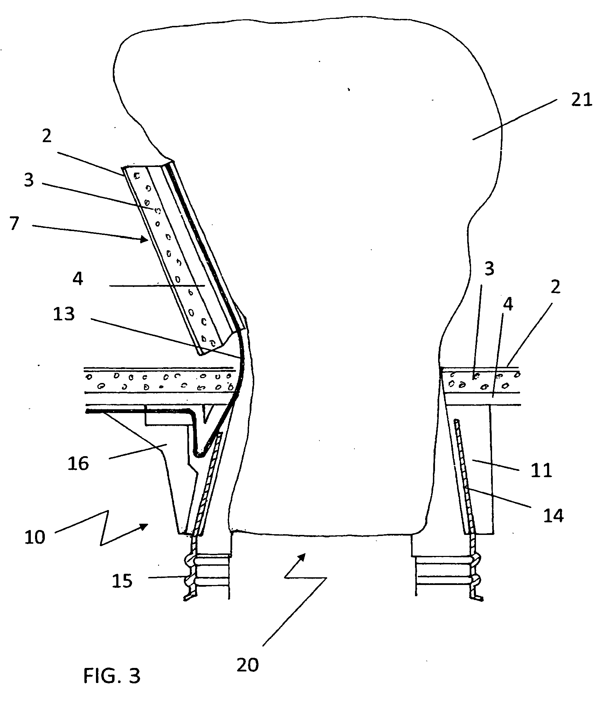

In der Figur 3 ist der Ausschnitt aus der Instrumententafel aus Figur 2 bei entfaltetem Airbag 21 zu sehen. Bei dieser Darstellung wird insbesondere die Funktion der Hubschlaufe 18 deutlich, die auf die Dicke der Instrumententafel 1 abgestimmt und so ausgewählt ist, dass ein Öffnen der Airbagabdeckung 7 ermöglicht wird, ohne dass es im Bereich des Scharniers zu Splitterungen kommt. Anhand der in der Figur 3 ausgewählten Darstellung wird zusätzlich deutlich, was unter einer Kraftoptimierung des Scharniergewebes 13 zu verstehen ist. So bildet das Gewebe 13 beim Entfalten des Airbags 21 und Öffnen der Airbagabdeckung 7 in Richtung der Kraftentfaltung durch den Airbag eine gerade Linie aus, so dass nun keine Scherkräfte mehr durch eine Winkelbildung im Gewebe 13 auftreten können, die eine Beschädigung des Scharniergewebes 13 herbeiführen könnten. Um ein Herausreißen des Gewebes 13 aus dem Bauteil zu verhindern, ist in der Schusskanalwand 11, in die das Gewebe 13 eingelegt ist, eine Umlenkung 17 vorgesehen, die von dem Gewebe 13 durchlaufen wird. Auf diese Weise wird das Gewebe nachhaltig verankert und ein Abreißen der Airbagabdeckung 7 mitsamt Gewebe 13 kann verhindert werden. Durch eine zusätzliche Verlägerung des Gewebes 13 in den Randbereich des Schusskanalmoduls 10 kann eine weitere Verstärkung der Verankerung erreicht werden.

### Bezugszeichenliste

- 1: Instrumententafel
- 2: Dekorschicht
- 3: Schaum
- 4: Träger
- 5: Verschwächung
- 6: Verschwächung
- 7: Airbagabdeckung

- 10: Schusskanalmodul
- 11: Schusskanalwand
- 12: Schusskanalabdeckung
- 13: Gewebe
- 14: Verstärkungselement
- 15: Befestigungsvorrichtung
- 16: Rippe
- 17: Umlenkung
- 18: Hubschlaufe
- 19: Befestigungsrand

- 20: Airbagmodul
- 21: Airbag

## Patentansprüche

1. Innenverkleidungsbauteil mit einem eine Schusskanalabdeckung (12) sowie Schusskanalwände (11) umfassenden Schusskanalmodul (10) für einen Airbag (21), wobei das Schusskanalmodul (10) ein in einen seitlichen Teilbereich des Schusskanalmoduls (10) sowie die Schusskanalabdeckung (12) eingelegtes, mit Kunststoff umspritztes Gewebe (13) mit Scharnierfunktion umfasst,
**dadurch gekennzeichnet, dass** das Schusskanalmodul (10) als Hybridbauteil ausgeführt ist und ein, die Seitenwände (11) des Schusskanals verstärkendes, in Kunststoff eingefasstes Verstärkungselement (14) aufweist.

2. Innenverkleidungsbauteil nach Anspruch 1,
**dadurch gekennzeichnet, dass** das Verstärkungselement (14) ein Blecheinleger ist.

3. Innenverkleidungsbauteil nach Anspruch 1 oder 2,
**dadurch gekennzeichnet, dass** der das Gewebe (13) umfassende Teilbereich des Schusskanals eine Umlenkung (17) aufweist, in die das Gewebe (13) eingelegt ist.

4. Innenverkleidungsbauteil nach einem der Ansprüche 1 bis 3,
**dadurch gekennzeichnet, dass** das Gewebe (13) zwischen dem das Gewebe (13) umfassenden Teilbereich des Schusskanals und der Schusskanalabdeckung (12) als im Schusskanal frei bewegliche Hubschlaufe (18) ausgebildet ist.

5. Innenverkleidungsbauteil nach einem der Ansprüche 1 bis 4,
**dadurch gekennzeichnet, dass** am Verstärkungselement (14) Befestigungsvorrichtungen (15) zur Befestigung eines Airbagmoduls (20) vorgesehen sind.

6. Innenverkleidungsbauteil nach einem der Ansprüche 1 bis 5,
**dadurch gekennzeichnet, dass** das Schusskanalmodul (10) über einen flächigen Befestigungsrand (19) mit dem Innenverkleidungsbauteil (1) verschweißt oder verklebt ist.

7. Innenverkleidungsbauteil nach einem der Ansprüche 1 bis 6,
**dadurch gekennzeichnet, dass** der flächige Befestigungsrand (19) fußförmig ausgebildet ist.

8. Innenverkleidungsbauteil nach einem der Ansprüche 1 bis 7,
**dadurch gekennzeichnet, dass** das Gewebe (13) bis in den flächigen Befestigungsrand (19) des Schusskanalmoduls (10) verlängert und dort verankert ist.

9. Innenverkleidungsbauteil nach einem der Ansprüche 1 bis 8,
**dadurch gekennzeichnet, dass** das Innenverkleidungsbauteil auf seiner Rückseite eine zum Befestigungsrand (19) des Schusskanalmoduls (10) korrespondierende Aufnahmefläche aufweist, über die das Schusskanalmodul (10) mit dem Innenverkleidungsbauteil verklebt oder verschweißt ist.

10. Innenverkleidungsbauteil nach einem der Ansprüche 1 bis 9,
**dadurch gekennzeichnet, dass** die Schusskanalabdeckung (12) mit der Rückseite eines die Airbagabdeckung (7) bildenden Bereichs eines Trägers (4) des Innenverkleidungsbauteils verklebt oder verschweißt ist.

## Claims

1. An inner-lining component with a chute-channel module (10) comprising a chute-channel covering (12) and chute-channel walls (11) for an airbag (21), wherein the chute-channel module (10) comprises a fabric (13) with a hinge function which is inserted into a lateral partial area of the chute-channel module (10) and into the chute-channel covering (12) and which has plastics material injected around it, **characterized in that** the chute-channel module (10) is designed in the form of a hybrid component and has a reinforcement element (14) which reinforces the lateral walls (11) of the chute channel and which is enclosed in plastics material.

2. An inner-lining component according to claim 1, **characterized in that** the reinforcement element (14) is a sheet-metal insert.

3. An inner-lining component according to claim 1 or 2, **characterized in that** the partial area of the chute channel embracing the fabric (13) has a redirecting portion (17) into which the fabric (13) is inserted.

4. An inner-lining component according to any one of claims 1 to 3, **characterized in that** the fabric (13) between the partial area of the chute channel embracing the fabric (13) and the chute-channel covering (12) is designed in the form of a lifting strap (18) freely movable in the chute channel.

5. An inner-lining component according to any one of claims 1 to 4, **characterized in that** fastening devices (15) for fastening an airbag module (20) are provided on the reinforcement element (14).

6. An inner-lining component according to any one of claims 1 to 5, **characterized in that** the chute-channel module (10) is welded or secured by adhesion to the inner-lining component (1) by way of a flat fastening edge (19).

7. An inner-lining component according to any one of claims 1 to 6, **characterized in that** the flat fastening edge (19) is designed in the form of a foot.

8. An inner-lining component according to any one of claims 1 to 7, **characterized in that** the fabric (13) is extended into the flat fastening edge (19) of the chute-channel module (10) and is anchored there.

9. An inner-lining component according to any one of claims 1 to 8, **characterized in that** the rear side of the inner-lining component has a receiving face which corresponds to the fastening edge (19) of the chute-channel module (10) and by way of which the chute-channel module (10) is secured by adhesion or welded to the inner-lining component.

10. An inner-lining component according to any one of claims 1 to 9, **characterized in that** the chute-channel covering (12) is secured by adhesion or welded to the rear side of an area of a support (4) of the inner-lining component forming the airbag covering (7).

## Revendications

1. Composant d'habillage intérieur comportant un module de canal de guidage (10) pour un coussin gonflable (21), comprenant un couvercle de canal de guidage (12) et des parois de canal de guidage (11),
- le module de canal de guidage (10) comportant un tissu (13) enrobé de manière plastique ayant une fonction de charnière, intégré dans une zone partielle latérale du module de canal de guidage (10) et dans la couverture du canal de guidage (12),
**caractérisé en ce que**
- le module de canal de guidage (10) est réalisé sous la forme d'une pièce hybride, et
- il comporte un élément de renforcement (14) intégré dans la matière plastique pour renforcer les parois latérales (11) du canal de guidage.

2. Composant d'habillage intérieur selon la revendication 1,
**caractérisé en ce que**
l'élément de renforcement est un insert en tôle.

3. Composant d'habillage intérieur selon la revendication 1 ou 2,
**caractérisé en ce que**
la zone partielle du canal de guidage comprenant le tissu (13) comporte une boucle (17) dans laquelle est stocké le tissu (13).

4. Composant d'habillage intérieur selon l'une des revendications 1 à 3,
**caractérisé en ce que**
le tissu (13) forme une boucle de soulèvement (18) mobile librement dans le canal de guidage entre la zone partielle comprenant le tissu (13) du canal de guidage et la couverture du canal de guidage (12) comme boucle de soulèvement (18) mobile librement dans le canal de guidage.

5. Composant d'habillage intérieur selon l'une des revendications 1 à 4,
**caractérisé en ce que**
l'élément de renforcement (14) comporte des dispositifs de fixation (15) pour être fixés à un module de coussin gonflable (20).

6. Composant d'habillage intérieur selon l'une des revendications 1 à 5,
**caractérisé en ce que**
le module de canal de guidage (10) est soudé ou collé au composant d'habillage intérieur (1) par un bord de fixation annulaire (19), plat.

7. Composant d'habillage intérieur selon l'une des revendications 1 à 6,
**caractérisé en ce que**
le bord de fixation plat (19), est en forme de talon.

8. Composant d'habillage intérieur selon l'une des revendications 1 à 7,
**caractérisé en ce que**
le tissu (13) se prolonge jusque dans le bord de fixation (19), plat, du module de canal de guidage (10) pour y être accroché.

9. Composant d'habillage intérieur selon l'une des revendications 1 à 8,
**caractérisé en ce que**
le composant d'habillage intérieur comporte sur son dos, une surface de réception correspondant au bord de fixation (19) du module de canal de guidage (10), et par cette surface, le module de canal de guidage (10) est collé ou est soudé au composant d'habillage intérieur.

10. Composant d'habillage intérieur selon l'une des revendications 1 à 9,
**caractérisé en ce que**
le couvercle de canal de guidage (12) est collé ou soudé au dos d'un dispositif de couverture de coussin gonflable (7) formant les zones d'un support (4) du composant d'habillage intérieur, par soudage ou collage.
